(19) Europäisches Patentamt
European Patent Office
Office européen des brevets

(11) Publication number: **0 045 147**
**B1**

(12) # EUROPEAN PATENT SPECIFICATION

(45) Date of publication of patent specification: **27.03.85**

(51) Int. Cl.[4]: **C 08 J 5/22,** C 25 B 13/00

(21) Application number: **81303172.1**

(22) Date of filing: **10.07.81**

(54) **Process for producing a membrane for electrolysis.**

(30) Priority: **29.07.80 JP 103096/80**

(43) Date of publication of application:
**03.02.82 Bulletin 82/05**

(45) Publication of the grant of the patent:
**27.03.85 Bulletin 85/13**

(84) Designated Contracting States:
**DE FR GB IT NL**

(56) References cited:
**GB-A-2 076 857**
**US-A-4 110 153**
**US-A-4 191 627**

(73) Proprietor: **ASAHI GLASS COMPANY LTD.**
**No. 1-2, Marunouchi 2-chome**
**Chiyoda-ku, Tokyo (JP)**

(72) Inventor: **Suhara, Manabu**
**No. 1742 Kumizawa-cho Totsuka-ku**
**Yokohama-shi Kanagawa-ken (JP)**
Inventor: **Gunjima, Tomoki**
**158-6 Shirane-cho Asahi-ku**
**Yokohama-shi Kanagawa-ken (JP)**
Inventor: **Miyake, Haruhisa**
**No. 62 Kuritaya Kanagawa-ku**
**Yokohama-shi Kanagawa-ken (JP)**

(74) Representative: **Warden, John Christopher et al**
**R.G.C. Jenkins & Co. 12-15, Fetter Lane**
**London EC4A 1PL (GB)**

**EP 0 045 147 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process for producing a membrane for an electrolysis. More particularly, it relates to a process for producing a membrane suitable for an electrolysis of water or an aqueous solution such as an aqueous solution of an acid, a base, an alkali metal halide or an alkali metal carbonate.

In the electrolysis of such aqueous solutions, especially a process for producing an alkali metal hydroxide and chlorine by an electrolysis of an aqueous solution of an alkali metal chloride, diaphragm or membrane processes have in recent years been employed instead of a mercury process in order to prevent public pollution. In the diaphragm or membrane process an asbestos liquid-permeable diaphragm has been commonly used for partitioning an anode compartment and a cathode compartment in an industrial operation. The diaphragm has usually been formed by depositing asbestos fibers on a perforated metallic cathode. On the other hand, an electrolysis using a liquid-impermeable membrane made of an ion exchange material has also been proposed, to overcome the disadvantages of the electrolysis using the liquid permeable diaphragm. The liquid impermeable membrane made of an ion exchange material, i.e. an ion exchange membrane, is usually supplied in the form of a film. Therefore, it could not be deposited directly on the perforated metallic cathode. The following process has been proposed for directly forming a liquid impermeable ion exchange membrane on the conventional perforated metallic cathode as disclosed in Japanese Unexamined Patent Publication No. 142,678/1977: An asbestos layer is formed on a surface of a perforated electrode and then a thermoplastic ion exchange material layer is deposited and melt-bonded on to the surface of the asbestos layer by a heat treatment to convert it into a water impermeable membrane whereby a membrane of a melt-bonded asbestos ion exchange material layer is formed on the perforated cathode. Thus, the conventional diaphragm electrolytic cell is converted into an ion exchange membrane type electrolytic cell. According to said process, it has been difficult to overcome the problems caused by the incorporation of an asbestos layer in the membrane and the requirement of a high temperature such as 240 to 300°C in the melt-bonding step.

It is an object of the present invention to overcome the above-mentioned troubles and disadvantages.

The present invention provides a process for producing an ion exchange membrane for electrolysis which comprises forming a removable thin layer on a surface of a perforated electrode; forming a layer of thermoplastic fluorinated polymer having ion exchange groups or functional groups convertible to ion exchange groups on said removable thin layer; converting said layer of a thermoplastic fluorinated polymer into a liquid-impermeable membrane; removing said removable thin layer, and if necessary, converting said functional groups into ion exchange groups.

As a result of studies aimed at overcoming the problems and disadvantages of said conventional process, it has been found that a liquid-impermeable ion exchange membrane can be obtained which can be used for an electrolysis without problems even without the asbestos fiber supporting layer of the prior art, that direct contact of the cathode with the ion exchange polymer layer does not give rise to problems, and the electrical resistance can be reduced. Moreover, when a thin layer of a polymer is used instead of an asbestos fiber layer, the layer can be easily removed.

The perforated electrodes used in the present invention can be conventional perforated electrodes having a hole area ratio of at least 30% in the form of an expanded metal, louvers, rods or a wire net. A perforated electrode having any desired configuration made of any desired material can be used and can have any desired pore area ratio. A plurality of perforated plates can be plied together. When a plurality of perforated plates having different pore area ratios are used, the perforated plate having the smaller pore area ratio is placed closest to the membrane. The cathode is preferably treated to reduce hydrogen over-voltage, formed as a finger-type electrode and installed in a diaphragm type electrolytic cell. It is important to have a configuration suitable for maintaining the desired current distribution and suitable for discharging the generated gas, and also suitable for forming a thin layer for depositing the ion exchange material at a desired thickness.

The anode can be made of a platinum group metal, a conductive oxide thereof, or a conductive reduction oxide thereof. On the other hand, the cathode can be made of a platinum group metal, a conductive oxide or an iron group metal.

The platinum group metals include platinum, rhodium, ruthenium, palladium and iridium. The iron group metals include iron, cobalt, nickel, Raney nickel, stabilised Raney nickel, stainless steel, alkali etched stainless steel (Japanese Examined Patent Publication No. 19229/1979). Raney nickel plated cathode (Japense Unexamined Patent Publication No. 112785/1979) rhodan nickel plated cathode (Japanese Unexamined Patent Publication No. 115676/1978).

The perforated electrode can be prepared from the material for the anode or the cathode. Thus, when a platinum group or a conductive oxide thereof is used, it is preferable to prepare the perforated electrode by coating such material on a surface of an expanded valve metal such as titanium and tantalum.

When acid resistance is not required as in the production of hydrogen by electrolysis of water, it is not always necessary to use a precious metal as the anode material. It is possible to use another suitable material with no high oxygen over-voltage, for example, platinum group metals such as platinum, iridium, palladium and ruthenium, alloys thereof; conductive oxides of said metal or alloy, graphite, nickel and nickel containing oxide. On the other hand, a material which does not have high acid resistance such as iron, stainless steel, nickel, Raney nickel and stabilised Raney nickel can be also effectively used as the cathode material. Thus, it is also possible to use platinum group metals such as platinum, ruthenium and rhodium, alloys thereof, conductive oxides thereof and carbon or graphite on which such material is supported as the cathode material.

The thin layer formed on the perforated electrode is used as a removable support for a layer of ion exchange material which is formed on the electrode and is removable from the side of the electrode. For easy removability by dissolution or decomposition, a polymer or an inorganic salt which easily forms a thin layer such as calcium carbonate may be used. It is also possible to form a layer of an inorganic fiber such as asbestos and glass fiber or a metallic foil layer such as aluminium foil and copper foil.

The polymers are suitably materials which can be easily removed from the surface of an electrode by dissolution, decomposition or shrinking by contact with water, a solution of an alkali metal hydroxide or an organic solvent, if necessary at an elevated temperature up to about 120°C. Preferred polymers include polyvinyl alcohols, polyacrylic acid, cellulose derivatives, polyvinyl pyrrolidone, vinyl acetate and vinylidene chloride. A solution or suspension of the polymer is coated on the perforated electrode by dipping, coating or plying a film or cloth, if necessary after forming it into a desired shape, or by depositing fibers or fine flakes from a slurry to form a thin layer having a thickness of 5 to 500 μm, preferably 10 to 200 μm. In order to impart uniform thickness and smoothness to the ion exchange layer formed on the thin layer, it is preferable to form the thin layer with a smooth surface and low surface porosity.

When inorganic fibers are used, the fibers in the form of a slurry are deposited on the perforated electrode, if necessary by applying vacuum suction to form the thin layer. When inorganic fibers are used, a rough surface of the thin layer may result. Thus, it is preferable to incorporate a water soluble polymer such as polyvinyl alcohol, polyacrylic acid, polyacrylamide and vinyl pyrrolidone in the slurry or to coat the fiber layer with a solution of water soluble polymer. Thereby the porosity of the thin layer is reduced to form a smooth surface for the ion exchange membrane.

Inorganic fibers having a diameter of 0.01 to 20 μm and a length of 0.5 to 20 mm are usually used to form a layer having a thickness of 10 to 2000 μm preferably 40 to 500 μm. It is preferable to give a density for liquid permeability of up to 5 $cm^3$ especially up to 0.5 $cm^3$ per 1 $cm^2$ minute under a pressure of 9806.65 Pa in a 20% aqueous solution of sodium chloride at 25°C.

The metallic materials are materials which can be dissolved in an aqueous solution of an acid or a base, for example, aluminium or copper. The metallic material in the form of a foil is coated on the perforated electrode by a physical process such as bonding, or the metallic material in the form of fibers or fine flakes is deposited from the slurry on to the perforated electrode to form a thin layer having a thickness of 5 to 2000 μm preferably 10 to 500 μm.

A layer of a thermoplastic fluorinated polymer having ion exchange groups or functional groups convertible to ion exchange groups is formed on the thin layer. The thermoplastic fluorinated polymer can be a polymer for ion exchange membranes having sulfonic acid groups, carboxylic acid groups, phosphoric acid groups or other ion exchange functional groups which have chlorine and/or oxygen resistance. A solution, an aqueous dispersion, or an organic solvent dispersion of the fluorinated polymer is uniformly applied to the thin layer by coating, dipping or a deposition under vacuum suction and the resultant layer can be dried under suitable conditions and if necessary heat-treated for melt-bonding particles of the polymer to form a liquid impermeable membrane.

It is especially preferable to use an organic solvent dispersion obtained according to Japanese Unexamined Patent Publication Nos. 149,479/1979 and 157,989/1979 which is a dispersion prepared by concentrating an aqueous dispersion of the fluorinate polymer obtained by an emulsion polymerisation followed by a centrifugal separation and adding a water-miscible organic medium such as alcohol, further concentrating by a centrifugal separation and repeating these steps to replace the aqueous medium by the hydrophilic organic medium because such organic medium suspension has excellent film formation characteristics and it is possible to form a liquid impermeable membrane from such a suspension by a heat-treatment at a relatively low temperature such as 40 to 160°C.

The typical fluorinated polymer used in the invention is a copolymer having 5 to 40 mol % of a functional fluorovinyl compound units which is obtained by polymerising a fluorovinyl compound having the formula

$$CF_2{=}CX{-}(CFX')_p{-}(OCF_2CFY)_l{-}$$
$$(O)_m{-}(CFY')_n{-}A$$

wherein p is 0—1, l is 0—3; m is 0—1; n is 0—12; X represents fluorine or chlorine atom or $—CF_3$; X' represents fluorine atom or $—CF_3$; Y represents fluorine atom or $—CF_3$; Y' represents fluorine atom or a $C_1—C_{10}$ perfluoroalkyl groupp; A represents —CN, $—COOR_1$, —COOM, $—CONR_2R_3$, $—SO_2F$, $—SO_3M$, $—SO_3H$, $—PO(OH)_2$, $—PO(OR_1)_2$, $—PO(OM)_2$; $R_1$ represents a $C_1—C_{10}$ alkyl group, $R_2$ and $R_3$ respectively represent hydrogen atoms or $R_1$ and M represents an alkali metal or quaternary ammonium group with a fluoroolefin having the formula

$CF_2{=}CZZ'$

wherein Z and Z' respectively represent fluorine, chlorine, hydrogen atom or $-CF_3$, if necessary with a third monomer in the presence of a polymerisation initiator in an aqueous medium in the presence of an emulsifier. The water-miscible organic solvents used for replacement can be alcohols, ketones, organic acids, aldehydes, amines, esters or ethers, preferably methanol, N-methyl pyrrolidone or diethyleneglycol monomethyl ester. The concentrating process can be a centrifugal separation, an electric decantation, a freezing process or an eveporating process.

The amount of ion exchange polymer in the thiin layer is usually selected to give an ion exchange membrane having a thickness of 30 to 1000 μm preferably 50 to 400 μm. When the membrane is too thick, the cost and the electric resistance are increased, whereas when it is too thin it does not have desired strength.

The perforated electrode on which the thin layer and the ion exchange layer are formed is treated to remove the thin layer. Usually, the thin layer is removed by dissolving it in an alkaline hydroxide, an acid or an organic solvent, if necessary at an elevated temperature of up to 160°C. The thin layer can also be removed by dissolving with decomposition or by peeling off with shrinkage depending upon the kind of thin layer material used. Provided the quality of the product obtained by the electrolysis is not adversely affected, part of the thin layer may be left, the removal being completed during the electrolysis operation. When an alkali metal hydroxide is used, it is usual to accomplish the conversion to form ion exchange groups by hydrolysis simultaneously with the removal of the thin layer. Otherwise the conversion of the ion exchange groups is performed after the removal of the thin layer.

It is important in the present invention, that the ion exchange membrane is substantially liquid impermeable even though severe conditions are used for removing the thin layer are given, and the liquid permeability should preferably not exceed 0.3 $cm^3/cm^2$.min, more preferably not more than 0.03 $cm^3/cm^2$.min in 20% aqueous solution of sodium chloride at 25°C.

The ion exchange capacity of the ion exchange membrane is usually in 0.5 to 2.5 meq/g dry polymer, preferably 0.8 to 2.0 meq/g dry polymer. The ion exchange membrane is not limited to one kind of the polymer or one kind of the ion exchange group. For example, the ion exchange capacity on the cathode side can be smaller or weak acidic ion exchange groups such as carboxylic acid groups can be used on the cathode side and strong acidic ion exchange groups such as sulfonic acid groups on the anode side.

When the ion exchange layer is formed on the perforated cathode, a conventional diaphragm type electrolytic cell of the type commonly used in industrial operations can be used as an ion exchange membrane type electrolytic cell and the disadvantages of the conventional diaphragm process can be eliminated. It is possible to apply the present invention to the anode.

In the process of the present invention, the electrolytic cell can be either a monopolar or dipolar type electrolytic cell using said ion exchange film. The substrate of the electrolytic cell in the electrolysis of an aqueous solution of an alkali metal chloride can be any substrate durable to an aqueous solution of an alkali metal chloride and chlorine such as valve metals and titanium in the anode compartment and any substrate durable to alkali metal hydroxide and hydrogen, such as iron, stainless steel or nickel in the cathode compartment.

The conditions used for electrolysis of an aqueous solution of an alkali metal chloride using the ion exchange membrane of the present invention can be the known conditions disclosed for example in Japanese Unexamined Patent Publication No. 112398/1979. For example, an aqueous solution of an alkali metal chloride having a concentration of 2.5—5.ON is fed into the anode compartment and water or a dilute alkali metal hydroxide is fed into the cathode compartment and the electrolysis is preferably performed at 80 to 120°C at a current density of 10 to 100 $A/dm^2$. In such a case, ions such as calcium and magnesium in an aqueous solution of an alkali metal chloride cause deterioration of the ion exchange membrane. Therefore the contents of such ions is preferably minimised. It is possible to add an acid such as hydrochloric acid to an aqueous solution of an alkali metal chloride in order to reduce the generation of oxygen on the anode.

When an electrolysis of water is carried out using the ion exchange membrane of the present invention, an aqueous solution of an alkali metal hydroxide such as potassium hydroxide, sodium hydroxide or lithium hydroxide is fed into the anode compartment equipped with an anode and water is fed into the cathode compartment equipped with the cathode and the ion exchange membrane. During electrolysis, hydrogen gas and an aqueous solution of an alkali metal hydroxide are formed in the cathode compartment. All or part of the aqueous solution of the alkali metal hydroxide is recycled into the anode compartment. Oxygen gas is formed in the anode compartment.

The concentration of the aqueous solution of the alkali metal hydroxide fed into the anode compartment is preferably in a range of 5 to 45 wt.%. When the concentration is less than the lower limit, effective reduction of the cell voltage cannot be expected whereas, when it is more than the upper limit, no further reduction in cell voltage is obtained and life of the cation exchange membrane is shortened or the substrate of the electrolytic cell is disadvantageously corroded.

During electrolysis, the temperature is preferably in a range of 80 to 150°C, especially 85 to 120°C and the current density is preferably in a

range of 10 to 150 A/dm$^2$, especially 20 to 100 A/dm$^2$.

The electrode reaction of an electrolysis of water with an aqueous solution of an alkali metal hydroxide to obtain hydrogen and oxygen gases in the present invention is as follows:

Cathode: $H_2O+e \rightarrow OH^- + 1/2\ H_2$

Anode: $OH^- \rightarrow 1/2\ H_2O + 1/4\ O_2 + e$

The theoretical cell voltage of this reaction is about 1.23 V. The cell voltage can be reduced by about 0.4 to 0.5 V in comparison with the conventional electrolysis if the cation exchange membrane is spaced from the electrode.

The examples of the electrolysis of an aqueous solution of an alkali metal chloride or an alkali metal hydroxide using the ion exchange membrane of the present invention have been illustrated. It is possible to use a membrane made by the process of the present invention for an electrolysis of a halogen acid such as hydrogen chloride and hydrogen bromide or an alkali metal carbonate.

The present invention will be further illustrated by the following examples and references which are provided for purposes of illustration only.

Example 1

A slurry of rayon fiber having a length of 2 to 15 mm and a diameter of 0.1 to 10 μm at a content of 6 wt.% was used to deposit the fiber on an electrode of an iron wire net having an effective electrolytic area of 10 dm$^2$, and the fiber was dried. The average thickness of the rayon fiber thin layer was 150 μm.

On the other hand, an aqueous dispersion of a copolymer of $CF_2=CF_2$ and

$$CF_2=CF—O—(CF_2)_3—COOCH_3$$

was converted into an organic medium dispersion of the copolymer having the following formulation by repeatedly replacing water to the organic solvent.

| | |
|---|---|
| Copolymer: | 25% |
| N-methyl pyrrolidone: | 43% |
| Methanol: | 17% |
| Water: | 15% |

The organic medium dispersion was applied to coat the copolymer on the rayon fiber thin layer and the layers were dried at 55°C for 20 hours.

The electrode having the layers was dipped in 25% NaOH aqueous solution at 90°C for 3 days to dissolve the rayon fiber thin layer and to hydrolyze the ester groups of the copolymer. The average thickness of the resulting ion exchange membrane on the electrode was 250 μ and the ion exchange capacity was 1.43 meq./g. dry polymer. Rayon fiber did not remain.

The treated electrode was used as a cathode and an expanded metal made of titanium on which ruthenium oxide was coated was used as an anode and both electrodes were kept within a space of 5 mm. An electrolysis was carried out by feeding 5N-NaCl aqueous solution into the anode compartment and feeding water into the cathode compartment while maintaining the pressure in the anode compartment higher than the pressure in the cathode compartment by 490 Pa at a current density of 20 A/dm$^2$ at 90°C for 3 months. As a result, 37% NaOH aqueous solution was obtained, the cell voltage was 3.50 V, the current efficiency was 94.7% and the content of NaCl in NaOH aqueous solution was 100 ppm. The characteristics were substantially stable.

Example 2

A polyvinyl alcohol film having a thickness of 50 μ was bonded on the iron wire net electrode of Example 1 with an adhesive. The organic medium dispersion of Example 1 was coated on the film and dried at 100°C for 10 hours to form an ion exchange membrane having a thickness of 200 μm. The electrode having the layers was dipped in 25% NaOH aqueous solution at 90°C for 2 days, whereby the polyvinyl alcohol film was completely removed.

The treated electrode was used to prepare an electrolytic cell of Example 1. An electrolysis was carried out by the process of Example 1 by feeding 5N-NaCl aqueous solution at a current density of 30 A/dm$^2$ for 3 months to obtain 35% NaOH aqueous solution having a content of NaCl of 12 ppm. The cell voltage was 3.63 V and the current effiency was 94.2%.

Example 3

A slurry of 3% of asbestos fiber having a length of 2 to 20 mm and a diameter of 0.5 to 5μ was used to deposit the fiber on the iron wire net electrode of Example 1 and the fiber was dried. The average thickness of the asbestos fiber thin layer was 200 μm. The organic medium dispersion of Example 1 was applied to coat the copolymer on the fiber layer and dried at 120°C for 5 hours to obtain an ion exchange membrane having an average thickness of 200 μm. The electrode having the layers was dipped in 25% NaOH aqueous solution at 90°C for 16 hours to hydrolyze the ester groups of the copolymer and to remove a part of the asbestos fiber.

The treated electrode was used to prepare an electrolytic cell of Example 1. An electrolysis was carried out by feeding 5N-NaCl aqueous solution into the anode compartment and feeding water into the cathode compartment while maintaining a concentration of NaOH in the catholyte of 40% for 14 days. According to the inspection of the cathode, the asbestos fiber was substantially dissolved and did not remain.

An electrolysis was carried out by maintaining a concentration of NaCl in the anolyte of 3.5N at a

current density of 20 A/dm$^2$ at 90°C for 6 months to obtain 37% NaOH aqueous solution having a content of NaCl of 60±10 ppm. The cell voltage was 3.46 V and the current efficiency was 94.6%.

The liquid permeation velocity of the ion exchange membrane after the electrolysis for 6 months was up to 0.01 cm$^3$/cm$^2$. min. under a pressure difference of 9,8 Pa at room temperature in 5 N-NaCl aqueous solution.

Example 4

A slurry of glass fiber having a length of 1 to 15 mm and a diameter of 0.2 to 5 µm was used to deposit the glass fiber on the iron wire net electrode of Example 1. The fiber was dried and 2% solution of polyvinyl alcohol was sprayed on the layer and dried. The average thickness of the glass fiber layer was 300 µm. An organic medium dispersion obtained by diluting the organic medium dispersion of Example 1 to a 10% of the concentration of the copolymer was coated three times with air drying between the coating steps on the layer of the electrode and the product was dried at 55°C for 50 hours.

The electrode having the layers was dipped in 25% NaOH aqueous solution at 90°C for 16 hours and also dipped in 30% NaOH aqueous solution for 5 days to hydrolyze the ester groups of the copolymer and to remove the glass fiber and polyvinyl alcohol to obtain an ion exchange membrane having a thickness of 300 µm.

The treated electrode was used to prepare an electrolytic cell of Example 1 and an electrolysis was carried out by feeding 5N-NaCl aqueous solution into the anode compartment for 3 months to obtain 35% NaOH aqueous solution having a content of NaCl of 25 ppm. The cell voltage was 3.45 V and the current efficiency was 94.5%.

Prior to the electrolysis, 5N-NaCl aqueous solution was placed in the anode side and 25% NaOH aqueous solution was placed in the cathode side to stand still for 2 hours. Then, the pressure in the anode side was increased by 133 Pa and the change of the concentration of NaCl in the aqueous solution of NaOH after applying the pressure was measured and the permeation velocity of NaCl aqueous solution was calculated. It was up to 2×10$^{-8}$ eq.cm$^2$ hour. The membrane was confirmed to be substantially liquid impermeable.

Example 5

An aqueous solution of 0.2% of sodium polyacrylate containing 5% of aluminum foil having a thickness of 3 to 10 µ and a size of 7—8 mm square was used for depositon by suction on the iron wire net electrode of Example 1 and it was dried. The average thickness of the aluminum layer with sodium polyacrylate as a binder was 50 µm. The organic medium dispersion of Example 1 was coated on the layer and dried at 120°C for 5 hours to obtain an ion exchange membrane having an average thickness of 250 µm. The electrode having the layers was installed in an electrolytic cell and 25% NaOH aqueous solution was charged in the cathode compartment and 5N-NaCl aqueous solution was charged in the anode compartment at 80°C for 64 hours at stand still to remove the aluminum foil and the binder and to hydrolyze the copolymer. An electrolysis was carried out by feeding 5N-NaCl aqueous solution in the anode compartment and feeding water in the cathode compartment while maintaining the concentration of NaOH in the catholyte at 40% for 30 days at a current density of 20 A/dm$^2$ at 90°C and as concentration of the anolyte of 3.2 N. The current efficiency for producing 40% NaOH was 95.1%, the cell voltage was 3.65 V and the content of NaCl in the NaOH aqueous solution was 8 ppm.

Example 6

A slurry of 6% of rayon fiber having a length of 2 to 15 mm and a diameter of 0.1 to 10 µm was used to deposit the rayon fiber on a nickel wire net treated by Raney nickel plating (10 mesh) having an effective electrolytic area of 10 dm$^2$ and the fiber was dried. The average thickness of the rayon fiber thin layer on the electrode was 150 µm.

The organic medium dispersion of Example 1 was applied to coat the copolymer on the rayon fiber thin layer and the layer was dried at 55°C for 20 hours. The electrode having the layers was dipped in 20% KOH aqueous solution at 90°C for 3 days to dissolve the rayon fiber thin layer and to hydrolyze the ester groups of the copolymer. The average thickness of the resulting ion exchange membrane on the electrode was 100 µm and the ion exchange capicity was 1.88 meq./g. dry polymer. Rayon fiber did not remain.

The electrode having the ion exchange membrane was used as a cathode and an expanded metal made of nickel on which platinum and iridium were coated was used as an anode and both electrodes were kept within a space of 2 mm. An electrolysis was carried out by feeding 20% KOH aqueous solution into the anode compartment and feeding water into a cathode compartment while maintaining the pressure in the anode compartment higher than the pressure in the cathode compartment by 490 Pa at a current density of 20 A/dm$^2$ at 90°C. The cell voltage was 1.69 V.

Example 7

A polyvinyl alcohol film having a thickness of 50µ was bonded on a Raney nickel plated nickel wire net electrode as used in Example 6 with an adhesive. The organic medium dispersion of Example 1 is applied to coat the copolymer on the film and dried at 100°C for 10 hours to form an ion exchange layer having a thickness of 200 µm and an ion exchange capacity of 1.88 meq./g. dry polymer.

The electrode having the layers was dipped in 20% KOH aqueous solution at 90°C for 2 days whereby the polyvinyl film was completely removed.

The treated electrode was used to prepare an electrolytic cell of Example 6. An electrolysis was carried out by the process of Example 6 by feeding 20% KOH aqueous solution at a current density of 30 $A/dm^2$. As a result, the cell voltage was 1.78 V.

Example 8

A slurry of 3% of asbestos fiber having a length of 2 to 20 mm and a diameter of 0.5 to 5 μ was used to deposit the fiber on the Raney nickel plated electrode of Example 6 and the fiber was dried. The average thickness of the asbestos fiber thin layer was 200 μm. The organic medium dispersion of Example 1 was coated in the fiber layer and dried at 120°C for 5 hours to obtain an ion exchange membrane having an average thickness of 150 μ. The electrode having the layers was dipped in 25% NaOH aqueous solution at 90°C for 16 hours to hydrolyze the ester groups of the copolymer and to remove a part of the asbestos fiber.

The treated electrode was used to prepare an electrolytic cell of Example 6. An electrolysis was carried out by feeding 25% NaOH aqueous solution into the anode compartment and feeding water into the cathode compartment while maintaining a concentration of NaOH in the catholyte of 25% for 14 days. According to the inspection of the cathode, the asbestos fiber was substantially dissolved and did not remain.

An electrolysis was carried out by maintaining a concentration of NaOH in the catholyte of 25% at a current density of 20 $A/cm^2$ at 90°C. The cell voltage was 1.82 V. The liquid permeation velocity of the ion exchange membrane after the electrolysis was up to 0.01 $cc/cm^2$. min under a pressure difference of 9,8 Pa at room temperature in 10% NaOH aqueous solution.

Example 9

A slurry of glass fiber having a length of 1 to 15 mm and a diameter of 0.2 to 5 μm was used to deposit the glass fiber on the Raney nickel plated electrode as used in Example 6 and the fiber was dried and a 2% solution of polyvinyl alcohol was sprayed on the layer and dried. The average thickness of the glass fiber layer was 300 μm. An organic medium dispersion obtained by diluting the organic medium dispersion of Example 1 to 10% of the concentration of the copolymer was applied to coat the copolymer three times with each air drying on the fiber layer of the electrode, with air drying between the coating steps and the product was dried at 55°C for 50 hours.

The electrode having the layers was dipped in 25% NaOH aqueous solution at 90°C for 16 hours and also dipped in 30% NaOH aqueous solution for 5 days to hydrolyze the ester groups of the copolymer and to remove the glass fiber and polyvinyl alcohol to obtain an ion exchange membrane having a thickness of 125 μ.

The treated electrode was used to prepare an electrolytic cell of Example 6 and an electrolysis was carried out by feeding 25% KOH aqueous solution into the anode compartment. The cell voltage was 1.73 V.

Example 10

An aqueous solution of 0.2% sodium polyacrylate containing 5% of aluminum foil having a thickness of 3 to 10 μm and a size of 7—8 $mm^2$ was used for deposition by suction on the nickel wire net of Example 6 which was platinum black plated and it was dried. An average thickness of the aluminum layer with sodium polyacrylate as a binder was 50 μ. The organic medium dispersion of Example 6 was coated on the layer and dried at 120°C for 5 hours to obtain an ion exchange layer having an average thickness of 125 μm. The electrode having the layers was installed in an electrolytic cell, 25% KOH aqueous solution was charged in the cathode compartment and in the anode compartment and the cell was allowed to stand at 80°C for 64 hours still to remove the aluminum foil and binder and to hydrolyze the copolymer. An electrolysis was carried out by feeding 25% KOH aqueous solution in the anode compartment and feeding water in the cathode compartment while maintaining the concentration of KOH in the catholyte at 25% for 30 days at a current density of 20 $A/dm^2$ at 90°C. The cell voltage was 1.72 V.

**Claims**

1. A process for producing an ion exchange membrane for an electrolysis which comprises forming a removable thin layer on a surface of a perforated electrode; forming a layer of a thermoplastic fluorinated polymer having ion exchange groups or functional groups convertible to ion exchange groups on said removable thin layer; converting said layer of a thermoplastic fluorinated polymer into a liquid impermeable membrane; and removing said removable thin layer, and if necessary, converting said functional groups into ion exchange groups.

2. The process according to Claim 1 wherein said removable thin layer is made of a polymer and is removed by treating with an aqueous solution of an alkali metal hydroxide or an organic solvent.

3. The process according to Claim 1 wherein said removable thin layer is made of an inorganic fiber and is removed by treating with an aqueous solution of an alkali metal hydroxide.

4. The process according to Claim 1 wherein said removable thin layer is made of metal and is removed by treating with an aqueous solution of an acid or a base.

5. The process according to any preceding claim wherein said thermoplastic fluorinated polymer having ion exchange groups or functional groups convertible to ion exchange groups is used in the form of an aqueous dispersion of said fluorinated polymer which is converted into an organic medium dispersion by replacing said aqueous solution with a hydrophilic organic medium.

6. The process according to any preceding claim wherein said fluorinated polymer layer is converted into a liquid impermeable membrane by heating it to a temperature from 40 to 160°C.

7. The process according to claim 5 wherein the liquid permeability of said liquid impermeable membrane is up to 0.3 $cm^3/cm^2$. minute under a pressure difference of 9806.65 Pa.

**Patentansprüche**

1. Verfahren zur Herstellung einer Ionenaustauschmembran für eine Elektrolyse, umfassend die Ausbildung einer entfernbaren dünnen Schicht auf einer Oberfläche einer perforierten Elektrode; die Ausbildung einer Schicht aus einem thermoplastischen fluorierten Polymeren mit Ionenaustauschgruppen oder funktionellen Gruppen, welche in Ionenaustauschgruppen umwandelbar sind, auf der entfernbaren dünnen Schicht; die Umwandlung der Schicht aus einem thermoplastischen fluorierten Polymeren in eine flüssigkeitundurchdringliche Membran; und die Entfernung der entfernbaren dünnen Schicht sowie gegebenfalls die Überführung der funktionellen Gruppen in Ionenaustauschgruppen.

2. Verfahren nach Anspruch 1, wobei die entfernbare dünne Schicht aus einem Polymeren besteht und entfernt wird durch Behandlung mit einer wässerigen Lösung eines Alkalimetallhydroxyds oder einem organischen Lösungsmittel.

3. Verfahren gemäß Anspruch 1, wobei die entfernbare dünne Schicht aus einem anorganischen Fasermaterial besteht und entfernt wird durch Behandlung mit einer wässerigen Lösung eines Akalimetallhydroxyds.

4. Verfahren nach Anspruch 1, wobei die entfernbare dünne Schicht aus Metall besteht und entfernt wird durch Behandlung mit einer wässrigen Lösung einer Säure oder einer Base.

5. Verfahren nach einem der vorstehenden Ansprüche, wobei das thermoplastische fluorierte Polymere mit Ionenaustauschgruppen oder funktionellen Gruppen, welche in Ionenaustauschgruppen überführbar sind, in Form einer wässrigen Dispersion des fluorierten Polymeren eingesetzt wird, welche durch Ersatz der wässrigen Lösung mit einem hydrophilen organischen Medium umgewandelt wird in eine Dispersion mit organischem Medium.

6. Verfahren nach einem der vorstehenden Ansprüche, wobei die fluorierte Polymerschicht in eine flüssigkeitundurchlässige Membran umgewandelt wird durch Erhitzen der Schicht auf eine Temperatur von 40 bis 160°C.

7. Verfahren nach Anspruch 5, wobei die Flüssigkeitspermeabilität der flüssigkeitsundurchlässigen Membran bis zu 0,3 $cm^3/cm^2$.Minute bei einem Druckunterschied von 9806,65 Pa beträgt.

**Revendications**

1. Procédé pour produire une membrane échangeuse d'ions pour l'électrolyse, qui consiste à former une mince couche apte à être éliminée sur une surface d'une électrode perforée; à former une couche d'un polymère thermoplastique fluoré comportant des groupes échangeurs d'ions ou des groupes fonctionnels convertibles en groupes échangeurs d'ions sur ladite couche mince apte à être éliminée; à convertir ladite couche de polymère thermoplastique fluoré en une membrane imperméable aux liquides; à éliminer ladite couche mince apte à être éliminée et, si nécessaire, à convertir lesdits groupes fonctionnels en groupes échangeurs d'ions.

2. Procédé selon la revendication 1, dans lequel ladite couche mince apte à être éliminée est formée d'un polymère et est éliminée par traitement avec une solution aqueuse d'un hydroxyde de métal alcalin ou un solvant organique.

3. Procédé selon la revendication 1, dans lequel ladite couche mince apte à être éliminée est formée d'une fibre minérale et est éliminée par traitement avec une solution aqueuse d'un hydroxyde de métal alcalin.

4. Procédé selon la revendication 1, dans lequel ladite couche mince apte à être éliminée est formée d'un métal et est éliminée par traitement avec une solution aqueuse d'un acide ou d'une base.

5. Procédé selon l'une quelconque des revendications précédentes dans lequel on utilise ledit polymère thermoplasique fluoré portant des groupes échangeurs d'ions ou des groupes fonctionnels convertibles en groupes échangeurs d'ions, sous la forme d'une dispersion aqueuse dudit polymère fluoré que l'on convertit en une dispersion dans un milieu organique en remplaçant ladite solution aqueuse par un milieu organique hydrophile.

6. Procédé selon l'une quelconque des revendications précédentes dans lequel on convertit ladite couche de polymère fluoré en une membrane imperméable aux liquides par chauffage à une température de 40 à 160°C.

7. Procédé selon la revendication 5, dans lequel la perméabilité aux liquides de ladite membrane imperméable aux liquides n'est pas supérieure à 0,3 $cm^3/cm^2$. minute sous une différence de pression de 9806,65 Pa.